# EUROPÄISCHE PATENTSCHRIFT

(11) **EP 2 624 170 B1**
(45) Veröffentlichungstag und Bekanntmachung des Hinweises auf die Patenterteilung: **26.12.2018**
(21) Anmeldenummer: 13000502.8
(22) Anmeldetag: 01.02.2013
(51) Int. Cl.: G06K 9/00

(54) **Verfahren zur Erkennung eines vorgegebenen Musters in einem Bilddatensatz**
Method for detecting a predetermined pattern in an image dataset
Procédé de reconnaissance d'un motif prédéterminé dans un ensemble de données d'image

(30) Priorität: 06.02.2012 DE 102012002321
(43) Veröffentlichungstag der Anmeldung: 07.08.2013
(73) Patentinhaber: Airbus Defence and Space GmbH, 85521 Ottobrunn (DE)
(72) Erfinder: Pongratz, Hans Wolfgang, 82024 Taufkirchen (DE); Hiebl, Manfred, 86633 Neuburg a. d. Donau (DE)
(74) Vertreter: Isarpatent

(56) Entgegenhaltungen:
- US-A1- 2003 190 076
- US-A1- 2004 101 199
- Kristen Grauman ET AL: "Part-Based Category Models", , 1. Januar 2009 (2009-01-01), XP055190698, Gefunden im Internet: URL:http://www.cs.utexas.edu/~grauman/cour ses/fall2009/papers/partbased.pdf [gefunden am 2015-05-21]
- BERND HEISELE ET AL: "A Component-based Framework for Face Detection and Identification", INTERNATIONAL JOURNAL OF COMPUTER VISION, KLUWER ACADEMIC PUBLISHERS, BO, Bd. 74, Nr. 2, 19. Dezember 2006 (2006-12-19), Seiten 167-181, XP019509439, ISSN: 1573-1405

## Beschreibung

### TECHNISCHES GEBIET

Die vorliegende Erfindung betrifft ein Verfahren zur Erkennung eines vorgegebenen Musters in einem Bilddatensatz nach dem Oberbegriff des Anspruchs 1.

### HINTERGRUND DER ERFINDUNG

Die Erkennung eines Musters in einem Bilddatensatz, der beispielsweise mittels einer Multispektralkamera oder einer anderen geeigneten Sensorik aufgezeichnet wurde, spielt in einer Vielzahl von Anwendungsfeldern eine Rolle. Einige solche Anwendungsfelder sind die militärische Aufklärung, die Chirurgie, die Verkehrsüberwachung oder Geländeüberwachung im zivilen Rahmen, oder auch etwa die Spracherkennung, Texterkennung und Gesichtserkennung. Häufig spielt in der Praxis außerdem der Zeitfaktor bei der Mustererkennung eine wichtige Rolle, und es ist als ein zentrales Problem der Mustererkennung anzusehen, dass die Erkennung von Mustern für gewünschte Zwecke häufig zu lange dauert.

So werden beispielsweise im Rahmen der militärischen Aufklärung Bilder eines zu überwachenden Geländes mittels einer Multispektralkamera aufgezeichnet, woraufhin untersucht werden soll, ob bestimmte Objekte, wie beispielsweise Fahrzeuge, Gebäude oder bestimmte Einrichtungen, in dem Gelände vorhanden sind. Einem gesuchten Objekt entspricht dann auf der Ebene von Bilddaten jeweils ein bestimmtes Muster, welches innerhalb eines aufgezeichneten Bilddatensatzes erkannt werden soll. Ein Bilddatensatz wird beispielsweise während eines Überflugs über das zu überwachende Gelände aufgezeichnet, und es ist wünschenswert, dass sehr schnell erkannt wird, ob, und wenn ja, welche der gesuchten Objekte in dem Gelände vorhanden sind. Es hat sich jedoch gezeigt, dass eine Auswertung von aufgezeichneten Bilddatensätzen länger dauert als gewünscht.

### STAND DER TECHNIK

Aus der Druckschrift DE 10 2005 009 626 A1 sind ein Verfahren und eine Kamera zum Verfolgen von Zielobjekten bekannt geworden, wobei die Kamera eine Bildsensoreinheit zum Erzeugen von Bilddaten und eine Verarbeitungseinheit zum Verarbeiten der von der Bildsensoreinheit an die Verarbeitungseinheit übertragenen Bilddaten aufweist. Nach dem Verfahren wurde vorgeschlagen, Teilbereiche von aufgezeichneten Bilddatensätzen zu ermitteln, für welche eine erhöhte Wahrscheinlichkeit besteht, dass sie ein gesuchtes Muster enthalten, und nur die Teilbereiche von der Bildsensoreinheit an die Verarbeitungseinheit zu übertragen. Auf diese Weise läuft die Mustererkennung zwar schneller ab, allerdings ist die Mustererkennung für viele Anwendungen, wie beispielsweise die Echtzeit-Geländeüberwachung im Rahmen militärischer Aufklärung, zu langsam.

Aus der Patentanmeldung DE 10 2006 060 612 A1 ist eine Multispektralkamera mit vier Spektralkanälen bekannt geworden, mit der Zielobjekte erfasst werden können, beispielsweise während des Überfliegens eines zu überwachenden Geländes, und die erfassten Bilddatensätze an eine, in der Regel am Boden stationierte Verarbeitungseinheit zu übermitteln. Auf den mittels der bekannten Multispektralkamera erfassten Bildern können auch Zielobjekte mit geringem Kontrast zum Hintergrund erkannt werden, zum Beispiel durch Verwendung von RGB-Bildern und Falschfarbenbildern. Auch nach dem hier vorgeschlagenen Verfahren ist die Verarbeitung der Bilddatensätze bis hin zur Erkennung von Zielobjekten allerdings sehr zeitintensiv.

Aus der Druckschrift DE 199 55 919 C1 ist schließlich ein Verfahren zur Erkennung von Mustern in einem Bilddatensatz bekannt geworden, bei dem anhand vorgegebener Kriterien wenigstens ein Teilbereich des Bilddatensatzes als relevant eingestuft wird, und aus Bildpunkten im relevanten Teilbereich Klassifikationsbilder gebildet werden, und zwar anhand von vorgegebenen Klassifikationsregeln zur Bestimmung der Zugehörigkeit von Bildbereichen zu einem vorgegebenen Muster. Daraufhin werden die zu einer bestimmten Musterklasse zugehörigen Klassifikationsbilder zusammengefasst, und es wird für zusammengefasste Klassifikationsbilder entschieden, ob sie einem vorgegebenen Muster entsprechen, was zur Erkennung des vorgegebenen Musters führt. Auch dieses Verfahren hat den Nachteil, dass die Erkennung von Mustern in Bilddatensätzen für viele Anwendungszwecke zu lange dauert.

Die bekannten Verfahren sind insbesondere nicht geeignet, um eine große Menge an Bilddatensätzen innerhalb von sehr kurzer Zeit auf das Vorhandensein eines Musters zu überprüfen. Eine Sofortüberwachung eines größeren Areals, beispielsweise mit einem Aufklärungsflugzeug, mit welchem laufend große Mengen an Bildern des Areals aufgezeichnet werden, und einer simultan ablaufenden Mustererkennung, ist somit mittels bekannter Verfahren nicht möglich.

Die Druckschrift Kristen Grauman et al., "Part-Based Category Models," Kapitel 7, Textauszug aus einem Entwurf für "Synthesis Lectures on Artificial Intelligence and Machine Learning: Visual Recognition," 1. Januar 2009, University of Texas, Austin, beschäftigt sich mit Objekterkennung in Bilddatensätzen.

Die Druckschrift Bernd Heisele et al., "A Component-based Framework for Face Detection and Identification," International Journal of Computer Vision, Bd. 74, Nr. 2. Seiten 167-181, 19. Dezember 2006, Kluwer Academic Publishers, beschäftigt sich mit Gesichtserkennung und Gesichtsidentifikation in Bildern.

Die Druckschrift US 2004/0101199 A1 offenbart Verfahren zur Mustererkennung in Bildern.

Die Druckschrift US 2003/190076 A1 offenbart Verfahren zum Bestimmen, ob ein erfasstes Bild einem Referenzbild entspricht. Hierbei wird ein digitales Bild für einen Vergleich mit einem Referenzbild erfasst. Es werden Gruppen von Pixeln in dem erfassten Bild identifiziert, für die anschließend entsprechende Pixelgruppen in dem Referenzbild ausgewählt werden. Die relativen Positionen der ausgewählten Pixelgruppen in den Referenzbildern und der Pixelgruppen im erfassten Bild werden verglichen, um darauf aufbauend eine Wahrscheinlichkeit zu bestimmen, dass die relativen Positionen zufällig auftraten.

### DARSTELLUNG DER ERFINDUNG

Es ist daher Aufgabe der vorliegenden Erfindung, ein Verfahren zur Erkennung eines vorgegebenen Musters in einem Bilddatensatz zu schaffen, welches schneller abläuft als bekannte Verfahren, und welches insbesondere eine schnellere Erkennung eines vorgegebenen Musters erlaubt.

Die Erfindung löst diese Aufgabe mit den Merkmalen nach dem Anspruch 1. Vorteilhafte Ausgestaltungen sind in weiteren Ansprüchen beschrieben.

Die Erfindung schafft ein Verfahren zur Erkennung des Vorhandenseins eines vorgegebenen Musters in einem Bilddatensatz, welcher mittels einer Vorrichtung zur Erfassung von wenigstens zwei elektromagnetischen Frequenzspektren erfasst wird, wobei der Bilddatensatz eine Vielzahl von Bildpunktdaten aufweist. Das Verfahren ist gekennzeichnet durch die folgenden Schritte:
- Bilden jeweils eines Datenvektors für jeden Bildpunkt des Bilddatensatzes, wobei die Komponenten des Datenvektors charakteristische Koeffizientenwerte aus den Bildpunktdaten des jeweiligen Bildpunktes und den Bildpunktdaten der Bildpunkte in einer ersten Testumgebung des Bildpunkts sind, wobei die erste Testumgebung aus fünf mal fünf Bildpunkten um den jeweiligen Bildpunkt aufgebaut ist, wobei eine lineare Filterung mit einem zweidimensionalen digitalen Filter auf die Bildpunktdaten angewendet wird, welche eine Differentiation, eine Kantenerkennung und eine Glättung umfasst, wobei wenigstens einer der charakteristischen Koeffizientenwerte gefilterte und gewichtete Farbkomponenten und/oder Helligkeitswerte der Bildpunkte in der ersten Testumgebung repräsentiert;
- entsprechendes Bilden von Referenzdatenvektoren mit charakteristischen Referenzkoeffizientenwerten für wenigstens zwei Musterbildpunkte aus Musterbildmaterial des vorgegebenen Musters, welches einem vorgegebenem Objekt entspricht, das mit der Vorrichtung aufgezeichnet wurde;
- Bilden einer erweiterten Testumgebung mit 25 mal 25 Bildpunkten um jeden Bildpunkt des Bilddatensatzes, welche aus in sich rotationsinvarianten Elementen mit fünf mal fünf Bildpunkten gebildet wird;
- Transformieren der erweiterten Testumgebung in 12 unterschiedliche Drehlagen durch Koordinatendrehung und Aufsummierung der charakteristischen Koeffizientenwerte der rotationsinvarianten Elemente;
- Bilden wenigstens eines ersten Differenzwerts für die transformierten erweiterten Testumgebungen der Bildpunkte aus einer Differenz zwischen dem Datenvektor des jeweiligen Bildpunkts und dem ersten Referenzdatenvektor;
- Bilden wenigstens eines zweiten Differenzwerts für wenigstens einen Bildpunkt aus einer Differenz zwischen dem Datenvektor dieses Bildpunkts und dem zweiten Referenzdatenvektor;
- Ermitteln, ob wenigstens eine aus dem ersten und dem zweiten Differenzwert gebildete Differenzensumme als Musterkorrelationsgröße einen vorgegebenen Schwellenwert unterschreitet und ob diese ein lokales Minimum bildet; und
- Erkennung des Vorhandenseins des vorgegebenen Musters, wenn der vorgegebene Schwellenwert unterschritten wurde und ein lokales Minimum vorliegt.

Die Testumgebung kann aus in sich rotationsinvarianten Elementen von beispielsweise fünf mal fünf Pixeln aufgebaut werden. Die Koeffizienten dieses fünf mal fünf Elementes werden, wie dies nachfolgend noch näher erläutert werden wird, durch gefilterte und gewichtete Farbkomponenten oder Helligkeitswerte des Mittelpixels des fünf mal fünf Pixel Elementes repräsentiert. Die Koeffizientenwerte können vorab bestimmt und in einer Datenbank abgelegt werden.

Das Verfahren zur Erkennung des vorgegebenen Musters, umfasst somit wenigstens einen Vorbereitungsschritt und fünf Auswertungsschritte. Im Vorbereitungsschritt wird das vorgegebene Muster in Form von Referenzdatenvektoren codiert, nämlich durch Bildung von mindestens zwei Referenzdatenvektoren. Die fünf Auswertungsschritte werden durchgeführt, um ein bereits vorgegebenes und codiertes Muster in einem aufgezeichneten Bilddatensatz zu erkennen, und umfassen das Bilden von Datenvektoren für Bildpunkte des erfassten Bilddatensatzes bis hin zur Erkennung des vorgegebenen Musters.
Als Vorrichtung zur Erfassung eines auszuwertenden Bilddatensatzes wird eine Vorrichtung zur Erfassung von wenigstens zwei elektromagnetischen Frequenzspektren eingesetzt, mit anderen Worten eine Vorrichtung zur Erfassung von zwei Spektralkanälen, vorzugsweise weist sie jedoch vier bis sechs, bei Bedarf aber auch mehr Spektralkanäle, zum Beispiel auch zehn Spektralkanäle auf. Als Vorrichtung ist beispielsweise eine Multispektralkamera geeignet. Diese kann eine Kodak® KAF-8300 Kamera zur Erfassung von rotem Licht, grünem Licht und nahem Infrarot, und eine Kamera des Typs TriWave® CC701 Visible, NIR, SWIR zur Erfassung von mittlerem und/oder fernem Infrarot umfassen. Ein mit der Vorrichtung erfasster Bilddatensatz weist eine Vielzahl von Bildpunktdaten auf, wobei einem Bildpunkt jeweils ein Bildpunktdatum mit einem aufgezeichneten Wert pro Spektralkanal der Vorrichtung zugeordnet wird.
Das vorgegebene Muster kann einem bestimmten, gesuchten Objekt entsprechen. Zur Durchführung des genannten Vorbereitungsschritts, dem Bilden von Referenzdatenvektoren, damit ein vorgegebenes Muster überhaupt erkannt werden kann, wird zum Beispiel ein vorgegebenes Objekt, im Rahmen der militärischen Aufklärung beispielsweise ein Panzer, mit der genannten Vorrichtung aufgezeichnet, und die Referenzdatenvektoren werden dann aus dem erfassten Musterbildmaterial gebildet. Der Begriff Vektor ist dabei, wie auch nachstehend, nicht im streng mathematischen Sinn zu verstehen, sondern drückt aus, dass verschiedene Datenwerte als Komponenten in einer geordneten Reihenfolge festgehalten werden. Nicht zur Erfindung gehörend kann ein gesuchtes Objekt nicht mittels der Vorrichtung aufgezeichnet werden, beispielsweise ein unzugängliches Fahrzeug, ist es auch möglich, mit einem Computergrapikprogramm ein Computermodell zu erstellen und die Referenzdatenvektoren aus dem Computermodell zu erzeugen. Dabei können auch eine Vielzahl von Mustern vorgegeben werden, und die Suche nach allen vorgegebenen Mustern kann parallel ablaufen. Ist ein Muster vorgegeben und in Form von Referenzdatenvektoren codiert, muss der genannte Vorbereitungsschritt nicht wiederholt werden, es können dann beliebige Bilddatensätze auf das Vorhandensein des Musters untersucht werden.

Die beiden Musterbildpunkte des Musterbilds, für welche Referenzdatenvektoren gebildet werden, sind vorzugsweise so zu wählen, dass sie möglichst aufschlussreiche Informationen enthalten. Handelt es sich bei dem Musterbild beispielsweise um ein Foto eines Panzers, werden also beispielsweise zwei Stellen des Panzers als Musterbildpunkte ausgewählt, die hinsichtlich Eigenschaften wie Farbe, Form, und so weiter, herausstechen, und stark mit der Umgebung kontrastieren, so dass die zugehörigen Referenzdatenvektoren möglichst aussagekräftiges Daten in der Form von charakteristischen Referenzkoeffizientenwerten als Komponenten des Referenzdatenvektors, enthalten. Bei einem Panzer wäre beispielsweise eine markante Stelle an einem Geschützturm oder etwa eine Einstiegsluke als Musterbildpunkt geeignet.

Ist wenigstens ein Muster vorgegeben, und ist ein auszuwertender Bilddatensatz aufgezeichnet, wird mindestens für einen ausgewählten Bereich der Bildpunkte des Bilddatensatzes, wobei der ausgewählte Bereich auch den gesamten Bilddatensatz umfassen kann, für jeden Bildpunkt ein Datenvektor mit charakteristischen Koeffizientenwerten gebildet. Der Datenvektor für einen bestimmten Bildpunkt wird dabei aus den Bildpunktdaten des Bildpunkts, und auch aus Bildpunktdaten von Bildpunkten in vorgegebenen Abstand des Bildpunkts gebildet. Somit wird nicht nur Information über den Bildpunkt selbst, sondern auch über benachbarte Bildpunkte berücksichtigt. Der Bildpunkt mitsamt der ihn in einem Gebiet von z.B. fünf mal fünf Pixeln umgebenden Bildpunkte, welche ebenfalls zur Bildung des Datenvektors berücksichtigt werden, ist eine Testumgebung des Bildpunkts. Eine Testumgebung kann beispielsweise aus einem Quadrat von fünf mal fünf Bildpunkten bestehen, in deren Mitte sich der Bildpunkt befindet, dessen Datenvektor gebildet wird. Es können aber auch größere Testumgebungen aus mehreren, z.B. neun jeweils 25 Punkt Elementen gebildet werden, die vorzugsweise in sich rotationsinvariant sind. Die so erweiterte Testumgebung besteht also aus dem Mittelelement und acht um das Mittelelement in einem Quadrat angeordneten Randelementen.

Für die Mustererkennung kann diese erweiterte Testumgebung jeweils in zwölf Drehlagen getestet werden, ob in einer der Drehlagen eine Korrelation mit dem Suchbild an dem darin enthaltenen Suchobjekt besteht. Zwölf Drehlagen reichen dabei in Folge der Rotationsinvarianz der 25 Punkt Einzelelemente aus, um mit sehr geringen Fehlern jede beliebige Drehlage abdecken zu können. Die Drehlage mit dem geringsten Differenzwert der Merkmalsvektoren wird als bester Match in eine Ergebnisdatenbank eingetragen an der Position des Mittelpixels und die Differenzsumme aufgezeichnet. Alle Pixel in der Ergebnisdatenbank, bei denen ein deutliches lokales Minimum des Differenzwertes der Merkmalsvektoren vorliegt und der Differenzwert unter einer gewissen Schranke liegt, wird als eine, als bekanntes Referenzbild erkannte, Testumgebung des Suchobjektes gewertet.

Der Merkmalsvektor der Testumgebung in der Drehlage wird dadurch gebildet, dass die Mittelpunkte der fünf mal fünf Elemente in der Drehlage im Suchbild berechnet werden. An den Koordinaten der transformierten Mittelpunkte werden aus dem Suchbild die in der Datenbank abgelegten rotationsinvarianten Mittelwerte und Standardabweichungen der normierten Farbkomponenten und des Helligkeitswertes entnommen und in den Merkmalsvektor der Testumgebung eingetragen ohne erneute Berechnung aller Mittelwerte in der gedrehten Lage. Das ergibt eine große Einsparung an Rechenaufwand.

Für die Bildpunkte des ausgewählten Bereichs wird eine Korrelation zwischen dem Bildpunkt und einem der Musterbildpunkte gesucht. Es wird dabei eine Differenz zwischen dem Datenvektor des Bildpunkts und dem ersten Referenzdatenvektor gebildet, und in Abhängigkeit der Differenz wenigstens ein erster Differenzwert gebildet. Die Differenz zwischen Datenvektor und erstem Referenzdatenvektor ist beispielsweise komponentenweise zu bilden, das heißt, dass eine Differenz zwischen jedem charakteristischen Koeffizientenwert des Bildpunkts und dem entsprechenden charakteristischen Referenzkoeffizientenwert gebildet wird. Der erste Differenzwert ist beispielsweise der Betrag des Differenzvektors, also dessen euklidische Norm. Alternativ dazu entsprechen beispielsweise mehrere erste Differenzwerte den gebildeten Differenzen der Koeffizientenwerte.

Analog wie der erste Differenzwert oder die ersten Differenzwerte gebildet wurden, wird für wenigstens einen Bildpunkt des ausgewählten Bereichs des Bilddatensatzes ein zweiter Differenzwert gebildet. Der wenigstens eine zweite Differenzwert wird wenigstens für einen Bildpunkt, bei Bedarf aber auch für eine Vielzahl, beispielsweise für alle Bildpunkte des ausgewählten Bereichs des Bilddatensatzes, gebildet.

Die Nummerierung der Bildpunkte und Datenvektoren, beziehungsweise der Referenzdatenvektoren, mit anderen Worten in welcher Reihenfolge der erste oder zweite Datenvektor oder der erste und zweite Referenzdatenvektoren verwendet werden, spielt dabei keine Rolle. Die Nummerierung ist nur zur Illustration geschaffen und stellt keine Beschränkung des beanspruchten Gegenstands dar. Die Reihenfolge der Korrelationsschritte hinsichtlich der ersten oder zweiten Datenvektoren lässt sich somit beliebig variieren.

Aus den ermittelten Differenzwerten wird schließlich eine Musterkorrelationsgröße gebildet, auf deren Basis eine Entscheidung gefällt wird, ob das vorgegebene Muster erkannt wird. Die Musterkorrelationsgröße kann Teilelemente aus allen normierten Farbkomponenten und der Gesamthelligkeit enthalten und damit einen Multispektralkorrelationsvektor bilden, auf dessen Basis eine Entscheidung gefällt wird, ob das vorgegebene Muster erkannt wird. Die Musterkorrelationsgröße kann ein einziger Wert sein, beispielweise die Summe der Beträge von zwei Differenzwerten, oder sie kann auch eine vektorielle Größe mit mehreren Werten sein, beispielsweise ein Vektor mit den Absolutbeträgen der Differenzen zwischen den charakteristischen Koeffizientenwerten des Bildpunkts und den ersten Referenzkoeffizientenwerten und den zweiten Referenzkoeffizientenwerten als Komponenteneinträge.

Schließlich wird als erste notwendige Bedingung für eine Mustererkennung überprüft, ob die Musterkorrelationsgröße einen Schwellenwert unterschreitet, wobei der Schwellenwert der Objektart der Musterkorrelationsgröße entsprechend vorzugeben ist, das heißt, dass der Schwellenwert ein einziger Wert ist, oder eine vektorielle Größe mit mehreren Einträgen. Ist der Schwellenwert unterschritten, bedeutet dies, dass die beiden Bildpunkte nahezu dieselben oder zumindest sehr ähnliche charakteristischen Koeffizientenwerte wie die Musterbildpunkte aufweisen. Falls tatsächlich das vorgegebene Muster in dem Bilddatensatz vorliegt und erkannt wurde, ist die Abweichung der ermittelten Musterkorrelationsgröße von einem idealtypischen Wert "Null" als Folge von Hintergrundrauschen, Messunschärfe und/oder dem Einfluss von Störvariablen anzusehen.

Als zweite notwendige Bedingung für eine Mustererkennung muss die Musterkorrelationsgröße an der Stelle des zu erkennenden Objekts ein lokales Minimum des Absolutbetrages der Differenzgröße aufweisen in allen Schnittrichtungen.

Da sich die zur Mustererkennung notwendige Datenmenge primär auf charakteristische Koeffizientenwerte, beziehungsweise Referenzkoeffizientenwerte, also auf Datenvektoren und Referenzdatenvektoren beschränkt, und Bilddatensätze hochselektiv verarbeitet werden, läuft das erfindungsgemäße Verfahren sehr schnell ab und erlaubt eine sehr schnelle Erkennung eines vorgegebenen Musters. Die Erkennung erfolgt insbesondere schneller als mittels der bekannten Verfahren. Das erfindungsgemäße Verfahren ist daher beispielsweise auch zum Einsatz im militärischen Bereich geeignet, beispielsweise für eine Echtzeitüberwachung eines Geländes mittels eines Flugobjekts, auf das Vorkommen von bestimmten Objekten hin, wie beispielsweise Fahrzeugen, Gebäuden oder bestimmten Einrichtungen.

Da Komponenten von Datenvektoren, die charakteristischen Koeffizientenwerte von Bildpunkten, nicht nur Informationen über den betreffenden Bildpunkt, sondern durch die digitale Filterung mit der erfindungsgemäßen Koeffizientenmatrix auch Informationen über die benachbarten 24 Bildpunkte des fünf mal fünf Pixel Elementes berücksichtigen, ist der Informationsgehalt der charakteristischen Koeffizientenwerte hoch verdichtet, so dass das Verfahren auf Basis von wenigen Daten sehr genau arbeiten kann. Die Genauigkeit des erfindungsgemäßen Verfahrens lässt sich, je nachdem wie viel Rechenleistung für die Durchführung des Verfahrens vorhanden ist, auf einfache Weise erhöhen, beziehungsweise für bestimmte Zwecke adaptieren, indem die Anzahl an Musterbildpunkten, bzw. Testumgebungen eines vorzugebenden Musters erhöht, beziehungsweise herabgesetzt wird.

Gemäß einer bevorzugten Ausführungsform des erfindungsgemäßen Verfahrens wird wenigstens ein charakteristischer Koeffizientenwert eines Datenvektors als Mittelwert aus den für Bildpunkte in einer ersten Testumgebung erfassten, im Frequenzbereich sichtbaren Lichts oder im Infrarotbereich liegender Bildpunktdaten ermittelt, oder als Mittelwert der Luminanzen der Bildpunkte der ersten Testumgebung ermittelt.

Die erste Testumgebung eines Bildpunkts ist dabei beispielsweise ein Quadrat von fünf mal fünf Bildpunkten, in deren Mitte sich der Bildpunkt befindet. Wurden beispielsweise mit einer Multispektralkamera mittels drei oder vier Spektralkanälen Farbwerte als Bildpunktdaten aufgezeichnet, wie beispielsweise Rotwerte, Grünwerte oder Infrarotwerte, lässt sich aus den Farbwerten eines Bildpunkts auch eine Luminanz, also ein Helligkeitswert des Bildpunkts bestimmen. Einer oder mehrere charakteristische Koeffizientenwerte werden dann aus den Mittelwerten der Bildpunktdaten in der Testumgebung, also beispielsweise aus den Rotwerten aller Bildpunkte, aller Grünwerte, aller Infrarotwerte und/oder aller Luminanzen der Bildpunkte in der ersten Testumgebung ermittelt. Einige charakteristische Koeffizientenwerte eines Datenvektors eines Bildpunkts sind dann beispielweise ein mittlerer Rotwert <R>₁, ein mittlerer Grünwert <G>₁, ein mittlerer Infrarotwert <I>₁, und ein mittlerer Luminanzwert <E>₁, wobei sich die Mittelwerte jeweils auf alle Werte im ersten Testbereich beziehen.

Wenigstens ein charakteristischer Koeffizientenwert eines Datenvektors wird außerdem vorzugsweise als eine Standardabweichung einer Farbe oder Helligkeit in den fünf mal fünf Bildpunktdaten ermittelt, die für innerhalb der ersten Testumgebung liegende Bildpunkte erfasst wurden, oder als eine Standardabweichung zwischen den Luminanzen der Bildpunkte der ersten Testumgebung ermittelt. Die Testumgebungen werden dabei genauso gebildet und ausgewertet wie bei den oben beschriebenen Merkmalsvektoren für die gewichteten Farbkomponenten- und Helligkeitswerte. Statt der Intensitätswerte werden nun die Standardabweichungen der Intensitätswerte eingesetzt in den Merkmalsvektor.

Sind als Bildpunktdaten normierte Farbwerte und der Gesamthelligkeitswert vorhanden, so werden nach der bevorzugten Ausführungsform beispielsweise die Standardabweichungen der Farbwerte und des Helligkeitswerts innerhalb der ersten Testumgebung als ein charakteristischer Koeffizientenwert des Merkmalsvektors ermittelt. Es können dabei auch mehrere oder alle charakteristische Koeffizientenwerte als Standardabweichungen ermittelt werden. Ein Datenvektor eines Bildpunkts kann also beispielsweise eine Standardabweichung der Rotwerte σ_{R} in der ersten Testumgebung, eine Standabweichung der Grünwerte σ_{G}, eine Standardabweichung der Infrarotwerte σ_{I}, und eine Standardabweichung der Luminanzwerte σ_{E} als charakteristische Koeffizientenwerte umfassen.

Vorzugsweise wird wenigstens ein charakteristischer Koeffizientenwert eines Datenvektors als Mittelwert von Farbdaten der Bildpunkte einer zweiten Testumgebung oder als Mittelwert der Luminanzen der Bildpunkte der zweiten Testumgebung ermittelt.

Die zweite Testumgebung ist größer als die erste Testumgebung. Die zweite Testumgebung ist dabei beispielsweise ein Quadrat von fünfzehn mal fünfzehn Bildpunkten und setzt sich aus 9 rotationsinvarianten fünf mal fünf Pixel Elementen zusammen und in ihrer Mitte befindet sich der nominelle Bildpunkt. Beispiele für charakteristische Koeffizientenwerte eines Datenvektors eines Bildpunkts sind dann beispielweise wiederum ein mittlerer Rotwert <R>₂, ein mittlerer Grünwert <G>₂, ein mittlerer Infrarotwert <I>₂, und ein mittlerer Luminanzwert <E>₂, wobei die Mittelwerte sich nun aber auf die zweite, und nicht auf die erste Testumgebung beziehen. Dabei können auch Mittelwerte, die sich auf die erste Testumgebung beziehen und Mittelwerte, die sich auf die zweite Testumgebung beziehen, als charakteristische Koeffizientenwerte koexistieren. Diese Testumgebung muss in der oben angegebenen Größe mindestens in 12 Drehlagen berechnet und getestet werden, welche Drehlage die beste Übereinstimmung mit dem Suchbildpunkt bringt. Die beste Drehlage wird dann als Mustermerkmalsvektor verwendet. Auch für die zweite Testumgebung kann ein Merkmalsvektor aus den Standardabweichungen der Farbkomponenten und der Helligkeit gebildet werden und so die Trennschärfe des Mustererkennungsverfahrens noch verbessert werden.
Wenn nach einer ersten Testumgebung auch eine zweite Testumgebung als zum vorgegebenen Referenzbild des Suchobjektes zugehörig bestimmt ist, ergibt sich einerseits, dass das vorgegebene Referenzbild wiedererkannt wurde, und aus der relativen Lage der beiden Testumgebungen andererseits auch die Position des Suchobjektes im Bilddatensatz sowie die Drehlage des Suchobjektes.
Die Anzahl der weiteren Testumgebungen kann zur Steigerung der Genauigkeit beliebig erhöht werden. Der Abstand, in welchem die weiteren Testumgebungen von der ersten Testumgebung auf dem Suchobjekt vorgegeben sind in dem Referenzbild, lässt sich nachmessen in dem Suchbild, um eventuelle Skalenabweichungen hinsichtlich des Abstands zwischen den Testumgebungen im Suchbild und im Referenzbild zu erfassen und zu berücksichtigen.
Dem vorgegebenen Suchobjekt entspricht dann ein vorgegebenes Referenzbild. Das Verfahren lässt sich dabei auf beliebige vorgegebene abbildbare Suchobjekte anwenden. Im militärischen Anwendungsbereich kann das vorgegebene Suchobjekt beispielsweise ein bestimmtes Fahrzeug wie beispielsweise ein Panzer sein. Von dem Suchobjekt wird dann beispielsweise mit einer Multispektralkamera ein Referenzbild in bekanntem Maßstab aufgezeichnet, so dass ein Referenzbilddatensatz des Objekts vorliegt. Ist das Suchobjekt nicht zugänglich, kann, als nicht zur Erfindung gehörend, auch ein Referenzbilddatensatz des Objekts durch ein Computergrafiksystem erzeugt werden, wenn genügend Information zu Farben und Aussenumriss des Suchobjektes vorliegen.
Bei der Suche nach sehr komplexen Gegenständen, die sich gut vom Hintergrund abheben, kann die Suche dadurch stark beschleunigt werden, dass die Suche in einem mit einer stark vergröberten Auflösung von z.B. sechs Meter bei einem 150 Meter Objekt dargestellten Suchbild gestartet wird, die so gewählt ist, dass das gesuchte Objekt gerade in einer 25 mal 25 Pixel Testumgebung erfasst wird. Sobald ein Suchobjekt erkannt wird, wird ein zweiter Satz von Testumgebungen bei höherer Auflösung von z.B. einem Meter Auflösung, der z.B. ein Schiff in z.B. sechs aneinanderliegenden Testumgebungen erfasst, gegen die Referenzdatenbasis getestet und die Erkennung des Objektes verfeinert.
Wenn damit noch keine genaue Zuordnung des gefundenen Objektes zu der Referendatenbasis möglich ist, werden aus der Referenzdatenbasis z.B. Einzelobjekte an Deck eines Schiffsobjektes mit der vollen Auflösung der Kamera von z.B. 0.2 Meter herangezogen, um damit eine genauere Klärung der Identität des betrachteten Schifsobjektes mit Bezug zur Referenzdatenbasis herbeizuführen.

Weiterhin können Objekte, z.B. Waffen, die an Deck eines normalerweise als legal bekannten Schiffes entdeckt werden, Hinweise geben, dass hier ein Verbrechen vorliegt. Für die genaue Erkennung von Waffen und ähnlichen gefährlichen Gegenständen können mit der Kamera Bilder mit sehr hoher Auflösung von 2,5 cm gemacht werden und mit Referenzaufnahmen verglichen werden. Aufnahmen dieser Art können als Beweismittel vor Gericht verwendet werden.

Wenigstens ein charakteristischer Koeffizientenwert eines Datenvektors wird vorzugsweise als ein Krümmungswert einer Farbfläche oder Luminanzfläche, also als eine Differenz zwischen dem Mittelwert der Bildpunktdaten oder Luminanzen der ersten Testumgebung und dem Mittelwert der Bildpunktdaten oder Luminanzen der zweiten Testumgebung ermittelt.

Ein Merkmalsvektor (Datenvektor) eines Bildpunkts kann als Komponenten ausser den Mittelwerten und der Standardabweichung auch einen Rotkrümmungswert K_{R}=<R>₁ -<R>₂, einen Grünkrümmungswert K_{G}=<G>₁ -<G>₂, einen Infrarotkrümmungswert K_{I}=<I>₁ -<I>₂, und einen Luminanzkrümmungswert K_{E}=<E>₁ - <E>₂ umfassen.

Gemäß einer bevorzugten Ausführungsform des erfindungsgemäßen Verfahrens werden aus den erfassten Bildpunkten diejenigen Bildpunkte als Vorauswahl ausgewählt, bei denen der erste Differenzwert einen vorgegebenen ersten Schwellenwert unterschreitet. Die Bildpunkte der Vorauswahl sind als zum vorgegebenen Muster potentiell zugehörige Bildpunkte anzusehen.

Je nach Ausführungsform wird dabei als Bedingung, die ein Bildpunkt erfüllen muss, um in die Vorauswahl aufgenommen zu werden, nur gefordert, dass ein einziger erster Differenzwert einen Schwellenwert unterschreitet, oder es kann auch für mehrere Differenzwerte vorgegeben werden, dass jeder einen individuellen Schwellenwert unterschreiten muss. Durch die Vorauswahl wird die weitere Auswertung auf eine kleinere Anzahl an Bildpunkten eingeschränkt, so dass das Verfahren schneller abläuft.

Gemäß einer weiteren Ausführungsform des Verfahrens wird eine Vorauswahl an Bildpunkten gebildet, indem Bildpunkte ausgewählt werden, bei denen ein oder mehrere Differenzwerte minimal sind.

Es lässt sich beispielsweise eine Anzahl an Bildpunkten vorgeben, zum Beispiel zwanzig Stück, und dann werden unter allen Bildpunkten bis zur vorgegeben Anzahl hin diejenigen ausgewählt, bei denen der oder die Differenzwerte minimal sind. Auf diese Weise lässt sich die weiter zu analysierende Datenmenge sehr schnell reduzieren, so dass das Verfahren schneller abläuft.

Gemäß einer vorteilhaften Weiterbildung der Erfindung werden die Referenzdatenvektoren aus Musterbildpunktdaten einer Referenztestumgebung gebildet, für die Bildpunkte des ausgewählten Bereichs oder der Vorauswahl wird in Abhängigkeit der Differenzen zwischen erfassten Bildpunktdaten und den Musterbildpunktdaten aus der Referenztestumgebung ein Histogramm erstellt, und in Abhängigkeit einer Auswertung des Histogramms wird eine Auswahl an Bildpunkten gebildet.

Durch die Auswertung eines Histogramms der Differenzen zwischen erfassten Bildpunktdaten in der ersten oder zweiten Testumgebung und den Musterbildpunktdaten in der Referenztestumgebung wird überprüft, ob die Bildpunktdaten in der Testumgebung den Musterbildpunkdaten sehr ähnlich sind. Die Auswertung des Histogramms ist daher genauer als eine Überprüfung der Abweichung zwischen charakteristischen Koeffizienten des Bildpunkts und eines Musterbildpunkts, da sich die charakteristischen Koeffizienten zufälligerweise ähneln können, weil beispielsweise zwei sehr unterschiedliche Datensätze an Werten zwei ähnliche Mittelwerte aufweisen. Mit der Histogrammauswertung wird somit ein sehr genauer Test durchgeführt, wie stark sich ein Bildpunkt und ein Musterbildpunkt ähnlich sind.

Da der Verfahrensschritt der Histogrammauswertung jedoch hinsichtlich der zu verarbeitenden Datenmenge aufwendiger ist als vorhergehende Schritte, wird er beispielsweise nur für Bildpunkte durchgeführt, die bereits Teil der Vorauswahl sind, und deshalb mit höherer Wahrscheinlichkeit zum vorgegebenen Muster gehören. Die Auswahl an Bildpunkten ist dabei vorzugsweise eine stärkere Eingrenzung auf potentiell zum Muster zugehörige Bildpunkte als die vorstehend genannte Vorauswahl. Auf diese Weise können durch sukzessive Einschränkungen auf immer kleinere Datenmengen, also beispielsweise von dem erfassten Bilddatensatz zu einem ausgewählten Teilbereich, zu einer Vorauswahl, und dann zu einer Auswahl, immer aufwendigere und genauere Prüfschritte zur Ermittlung, ob ein Bildpunkt zum vorgegebene Muster gehört, durchgeführt werden, bei gleichzeitig sehr schnell ablaufendem Verfahren, da die zu verarbeitenden Datenmengen bei jedem Schritt kleiner gehalten werden.

Gemäß einer bevorzugten Ausführungsform des erfindungsgemäßen Verfahrens werden für einen Bildpunkt, der zur Vorauswahl oder zur Auswahl an Bildpunkten gehört, in einem vorgegebenen Abstand zu dem Bildpunkt weitgehend kreisförmig angeordnete weitere Bildpunkte ausgewählt, und ein weiterer der Bildpunkte, dessen zugehöriger zweiter Differenzwert minimal ist und einen vorgegebenen zweiten Schwellenwert unterschreitet, wird als der zweite Bildpunkt des Musters bestimmt.

Wenn nach einem ersten Bildpunkt auch ein zweiter Bildpunkt als zum vorgegebenen Muster zugehörig bestimmt ist, ergibt sich einerseits, dass das vorgegebene Muster erkannt wurde, und aus der Kombination der beiden Bildpunkte andererseits auch die Position des Musters im Bilddatensatz sowie die Drehlage des Musters. Je nachdem, wie genau das Verfahren sein soll, und insbesondere wie genau die Drehlage bestimmt werden soll, kann für den letztgenannten Verfahrensschritt eine entsprechende Anzahl an weiteren Bildpunkten vorgegeben werden. Ein Beispiel wäre die Vorgabe von zwölf weiteren Bildpunkten auf einem den ersten Bildpunkt umgebenden Kreis. In diesem Fall kann die Drehlage des Musters auf 30 Grad genau bestimmt werden.

Die Anzahl der weiteren Bildpunkte kann zur Steigerung der Genauigkeit beliebig erhöht werden. Der Abstand, in welchem sich die weiteren Bildpunkte vom ersten Bildpunkt vorgegeben werden, lässt sich zudem beispielsweise in Abhängigkeit von Daten über das vorgegebene Muster vorgegeben, um eventuelle Skalenabweichungen hinsichtlich des Abstands zwischen Musterbildpunkten und erstem und weiteren Bildpunkten im Suchbild zu berücksichtigen.

Nach einer vorteilhaften Weiterbildung der Erfindung wird ein Datenvektor in Abhängigkeit der Bildpunktdaten von Bildpunkten einer Testumgebung, die den Bildpunkt weitgehend quadratisch oder kreisförmig umgibt, ermittelt. Dabei können auch mehr als eine Testumgebung, beispielsweise, wie vorstehend beschrieben, eine kleinere erste Testumgebung, mit beispielsweise ungefähr 25 Bildpunkten, und eine größere zweite Testumgebung mit beispielsweise ungefähr 225 Bildpunkten verwendet werden. Eine Testumgebung wird beispielsweise durch die Bildpunkte innerhalb eines den Bildpunkt umgebenden Quadrats oder eines Kreises gebildet.

Gemäß einer bevorzugten Ausführungsform des erfindungsgemäßen Verfahrens wird ein Referenzdatenvektor aus einem mittels der Vorrichtung erfassten Bilddatensatz eines vorgegebenen Objekts und/oder aus einem Bilddatensatz, der aus einem Modell des vorgegebenen Objekts erzeugt wurde, ermittelt.

Dem vorgegebenen Objekt entspricht dann ein vorgegebenes Muster. Das Verfahren lässt sich dabei auf beliebige vorgegebene Objekte anwenden. Im militärischen Anwendungsbereich kann das vorgegebene Objekt beispielsweise ein bestimmtes Fahrzeug wie beispielsweise ein Panzer sein. Das Objekt wird dann beispielsweise mit einer Multispektralkamera aufgezeichnet, so dass ein Bilddatensatz des Objekts vorliegt. Ist das Objekt nicht zugänglich, kann auch ein Datensatz aus einem Modell des Objekts erzeugt werden.

Nach einer Weiterbildung des erfindungsgemäßen Verfahrens wird außerdem ein Hintergrundreferenzbild erfasst, und die Datenvektoren von Bildpunkten werden in Abhängigkeit der Bildpunktdaten des Hintergrundreferenzbildes aufbereitet.

Das Hintergrundreferenzbild ist eine Aufzeichnung des Hintergrunds, vor welchem das vorgegebene Muster anschließend gesucht wird. Im Hintergrundreferenzbild wird der Hintergrund vorzugsweise allerdings ohne das vorgegebene Muster erfasst, und dient anschließend dazu, erfasste Bildpunktdaten in Bezug zu Bildpunktdaten des Hintergrunds setzen zu können.

Soll unter Einsatz des erfindungsgemäßen Verfahrens beispielsweise ein Fahrzeug in der Wüste gesucht werden, wird die Wüste als Hintergrundreferenzbild aufgezeichnet. Wird dasselbe Fahrzeug beispielsweise auf einer Graslandschaft gesucht, wird die Graslandschaft als Hintergrundreferenzbild aufgezeichnet. Das Hintergrundreferenzbild liefert Hintergrund-Bildpunktdaten, wie beispielsweise charakteristische Farbwerte, etwa Rotwerte oder Grünwerte, welche dazu eingesetzt werden können, in einem erfassten Suchbild Störvariablen zu reduzieren. Eine solche Störvariable kann beispielsweise darin begründet sein, dass ein Fahrzeug in der Wüste bei Tag prinzipiell höhere Rotwerte emittiert als bei Nacht und dadurch eine andere Farbe als bei neutralem Hintergrund aufweist, wie er für die Aufnahme der Referenzbilder verwendet wird. Mittels geeigneten Hintergrundreferenzbildern, die zu verschiedenen Tageszeiten und bei verschiedenen Wetterlagen aufgezeichnet worden sind, können ebenfalls von der Tageszeit- und Wetterlage abhängige Störvariablen reduziert werden. Bildpunktdaten und/oder Datenvektoren von erfassten Bildpunkten können unter Berücksichtigung der Hintergrundreferenzbilder somit normalisiert werden, so dass beispielsweise bei allen Tageszeiten und Wetterlagen ähnliche, normalisierte Farbwerte und Luminanzwerte des gesuchten Objekts zu erwarten sind.

Vorzugsweise wird eine affine Transformation auf erfasste unnormierte Farbkomponentenwerte der Bildpunktdaten zur Normalisierung eines Helligkeitswertes und/oder eines Farbkontrastwerts angewendet. Die vorgegebenen oder anzuwendenden Parameter der affinen Transformation werden beispielsweise aus den Bildpunktdaten des Hintergrundreferenzbildes ermittelt oder sind in einem Simulationsrechenprogramm als Modell hinterlegt. Nach der affinen Transformation kann eine lineare Filterung mit einem erfindungsgemäß gewichteten, gemittelten Farbkomponentenwert beziehungsweise Helligkeitswert auf erfasste Farbkomponenten der Bildpunktdaten angewendet werden. Dies Filterung kann eine Differentiation und Kantenverstärkung in der Fläche und eine Glättung im Detail umfassen.

Es wird außerdem vorzugsweise zur Spreizung wenigstens einer normierten Farbkomponente der Bilddaten und/oder zur Stauchung wenigstens einer Farbkomponente eine affine Transformation auf erfasste Bildpunktdaten beziehungsweise erfasste Farbvektordaten aller Bildpunkte eines Suchbildes angewendet, um den Farbkontrast der gesuchten Objekte im Suchbild gezielt zu erhöhen und damit zu optimieren.

Auf diese Weise wird die Sensitivität gegenüber kleineren Unterschieden zwischen Bildpunktdaten und Referenzdaten in dem Frequenzbereich, der gespreizt wird, erhöht, und in dem Bereich, der gestaucht wird, herabgesetzt. Der Frequenzbereich, der gespreizt wird, wird dabei auf besonders aussagekräftige Frequenzen gelegt. Andere Frequenzbereiche, die weniger aussagekräftig sind, werden hingegen gestaucht. Unter dem Spreizen ist dabei eine lineare oder nicht-lineare Veränderung der Farb- oder Helligkeits-Skala zu verstehen. Die gespreizten Bereiche werden dabei überhöht, und daher genauer dargestellt, und die gestauchten Bereiche werden weniger genau dargestellt.

Bei einer militärischen Anwendung des Verfahrens liegt ein Frequenzbereich, der gespreizt werden soll, beispielsweise im Bereich von Farbwerten von Tarnfarben, also beispielsweise bei bestimmten Grünwerten und Braun- oder Rotwerten der Farben, mit welchen Militärfahrzeuge typischerweise getarnt werden. Auf diese Weise lässt sich zum Beispiel genauer unterscheiden, ob ein erfasster Grünwert tatsächlich einer Tarnfarbe des vorgegebenen Objekts oder einem im Hintergrund, etwa in der Vegetation typischerweise vorkommenden Grünwert entspricht. Auf diese Weise wird der Kontrast zwischen einem gesuchten Objekt und einem Hintergrund erhöht.
Darüber hinaus wird generell wie oben beschrieben, auf das ganze Suchbild eine lineare Filterung durch ein modifiziertes Sobelfilter angewendet, das eine Differentiation und Kantenhervorhebung im Großen und eine Glättung von Kontrast- und Farbverläufen im Kleinen auf erfasste Bildpunktdaten bewirkt. Hierzu wird beispielsweise eine erfindungsgemäße Koeffizientenmatrix eingesetzt und auf einen gebildeten Datenvektor angewendet.
Auf diese Weise werden beispielsweise, wenn Farbwerte als Bildpunktdaten erfasst wurden, bei Farbübergangszonen die Übergänge steiler und schmaler, so dass reinere Farbwerte mit besserem Kontrast gegenüber benachbarten Gebieten mit anderen Farbwerten resultieren.
Gemäß einer bevorzugten Ausführungsform des erfindungsgemäßen Verfahrens werden für einen Bildpunkt Datenvektoren mit wenigstens sechzehn charakteristischen Koeffizientenwerten ermittelt.
Die sechzehn charakteristische Koeffizientenwerte sind beispielsweise Mittelwerte von erfassten Rotwerten <R>₁, erfassten Grünwerten <G>₁, erfassten Infrarotwerte <I>₁, und Mittelwerte berechneter Luminanzen <E>₁ von Bildpunkten in einer ersten Testumgebung, Standardabweichungen der genannten Größen innerhalb der ersten Testumgebung, σ_{R}, σ_{G}, σ_{I}, σ_{E}, Mittelwerte derselben Größen innerhalb einer zweiten Testumgebung, <R₂>, <G₂>, <I₂>, <E₂>, und aus der Differenz der Mittelwerte in den beiden Testumgebungen ermittelte Krümmungswerte K_{R}=<R>₁-<R>₂, K_{G}=<G>₁-<G>₂, K_{I}=<I>₁-<I>₂, K_{E}=<E>₁-<E>₂.

Vorzugsweise werden also mindestens zweiunddreißig charakteristische Koeffizientenwerte zur Erkennung eines vorgegebenen Musters in Beziehung zu zweiunddreißig charakteristischen Referenzkoeffizientenwerten gesetzt, nämlich sechzehn Koeffizienten des ersten Datenvektors und sechzehn Koeffizienten des zweiten Datenvektors. Weitere charakteristische Koeffizienten, mit welchen sich Korrelationen zwischen dem Muster und Bildpunkten des erfassten Bilddatensatzes überprüfen lassen, sind beispielsweise durch Bildung einer Differenz zwischen Komponenten des ersten und zweiten, und bei Bedarf, zwischen Komponenten von weiteren Datenvektoren zu ermitteln. Zu den zweiunddreißig charakteristischen Koeffizientenwerten können beispielsweise vier weitere hinzugezogen werden, die durch Differenzbildung zwischen den Farbwerten und Luminanzwerten des ersten und des zweiten Datenvektors ermittelt werden.

Nach einer weiteren bevorzugten Ausführungsform des erfindungsgemäßen Verfahrens werden für eine Testumgebung mit 15 mal 15 Pixeln aus neun fünf mal fünf Pixel Elementen verwendet. Dafür werden Datenvektoren mit neun mal vier Farbkomponenten und Helligkeitswerten, also 36 charakteristischen Koeffizientenwerten ermittelt, wenn nur die Mittelwerte verwendet werden. Wenn die Standardabweichungen ebenfals verwendet werden umfasst der Koeffizientensatz des Merkmalsvektors einer Testumgebung 72 Koeffizienten.

Nach einer weiteren bevorzugten Ausführungsform des erfindungsgemäßen Verfahrens wird eine Testumgebung mit 25 mal 25 Pixeln aus neun fünf mal fünf Pixel Elementen und vier 15 mal 15 Pixel Ringelementen, die an den Ecken der Testumgebung angeordnet sind, verwendet. Dafür werden Datenvektoren mit 13 mal vier Farbkomponenten und Helligkeitswerten, also 52 charakteristischen Koeffizientenwerten ermittelt, wenn nur die Mittelwerte verwendet werden. Wenn die Standardabweichungen ebenfals verwendet werden umfasst der Koeffizientensatz des Merkmalsvektors dieser Testumgebung 104 Koeffizienten.

Für die Bildauswertung mit diesen beiden Testumgebungen genügt es, jeweils zwölf gleichmäßig verteilte Drehlagen des Zielobjektes zu testen, um die volle Erkennungstrennschärfe des Bilderkennungsalgorithmus' zu erreichen.

Die acht charakteristischen Koeffizientenwerte eines Bildpunktes sind beispielsweise Mittelwerte und Standardabweichungen von erfassten Rotwerten <R>₁, erfassten Grünwerten <G>₁, erfassten Infrarotwerten <I>₁, und erfassten Luminanzen <E>₁ von Bildpunkten in einer Testumgebung, und die Standardabweichungen der genannten Größen innerhalb des ersten Bildpunktes der ersten Testumgebung, σ_{R}, σ_{G}, σ_{I}, σ_{E}.

### KURZE BESCHREIBUNG DER ZEICHNUNGEN

Die Erfindung wird nachstehend anhand der beigefügten Zeichnungen beispielhaft näher erläutert. Es zeigt:
- Fig. 1: eine Darstellung eines mittels des erfindungsgemäßen Verfahrens erkannten Musters in sechs unterschiedlichen Drehlagen; und
- Fig. 2: eine graphische, schematische Darstellung zur Erläuterung des Verfahrens.

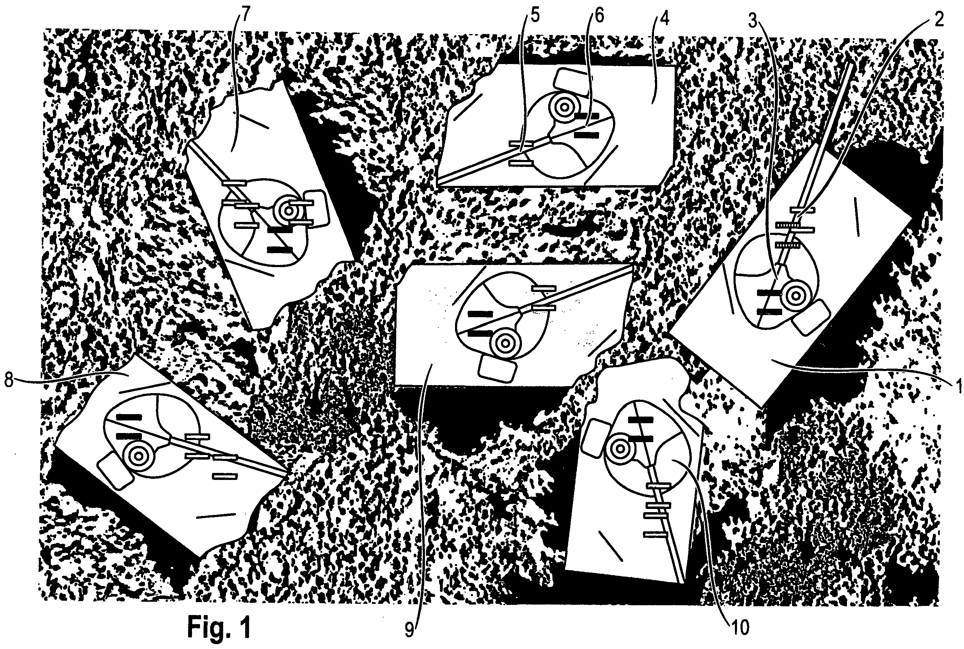

Fig. 1 zeigt ein mittels des erfindungsgemäßen Verfahrens erkanntes Muster in sechs unterschiedlichen Drehlagen. Das dargestellte Ausführungsbeispiel des vorgegebenen Musters entspricht dabei einer mittels einer Multispektralkamera vorgenommenen Aufzeichnung eines Kampfpanzers in sechs unterschiedlichen Drehlagen.

Die Aufnahmen des Panzers sind beim Überfliegen eines Geländes gemacht worden, wobei die genannte Multispektralkamera an Bord eines Flugkörpers stationiert war und vier Spektralkanäle aufwies. Sie ist zur Erfassung von roten Farbwerten, grünen Farbwerten, nahem Infrarot und fernem Infrarot ausgebildet. Für den dargestellten Panzer waren, bevor die Aufnahme gemacht wurde, zwei Referenzdatenvektoren für zwei ausgewählte Musterbildpunkte eines zuvor mit derselben Kamera aufgenommenen Musterbilds gebildet worden. Die beiden ausgewählten Musterbildpunkte liegen bei der dargestellten Ausführungsform auf dem Geschützturm des Panzers und an einem vom Geschützturm ausgehenden Geschützrohr.

Die in Fig. 1 gezeigten Panzer wurden erkannt, indem zuerst ein Bildpunkt ermittelt wurde, der dem ersten Musterbildpunkt, im vorliegenden Fall demjenigen am Geschützrohr entspricht. Danach wurde in einem kreisförmigen Gebiet rund um den ersten Bildpunkt nach weiteren Bildpunkten gesucht, und ermittelt, ob einer der weiteren Bildpunkte, und wenn ja, welcher dem zweiten Musterbildpunkt, also demjenigen am Geschützturm, entspricht.

Der erste Bildpunkt liegt in der Fig. 1 jeweils zwischen zwei weiß markierten Balken, der zweite Bildpunkt liegt jeweils zwischen zwei dunkel markierten Balken. Bei einem ersten Panzer 1, oben rechts in Fig. 1 gezeigt, wurden ein erster Bildpunkt 2 und links und unterhalb des ersten Bildpunkts 2 ein zweiter Bildpunkt 3 gefunden. Aus der relativen Position der beiden Bildpunkte 2, 3 zueinander, wurde einerseits die Position und andererseits die Drehlage des Panzers 1 bestimmt. Dieser ist mit seinem Geschützrohr ungefähr in einem 20-Grad-Winkel nach rechts oben in der Figurenebene orientiert.

Bei einem zweiten Panzer 4 wurden wiederum ein erster zum Panzer zugehörigen Muster zugehöriger Bildpunkt 5 und ein zweiter Bildpunkt 6 identifiziert, wobei der zweite Bildpunkt 6 bei diesem Panzer 4 rechts oberhalb des ersten Bildpunkts 5 gefunden wurde. Aus den bestimmten Bildpunkten 5, 6 wurde wiederum die Position und die Drehlage des Geschützrohrs des Panzers 4 ermittelt.

Auch die weiteren Panzer 7, 8, 9, 10 wurden mittels des erfindungsgemäßen Verfahrens erkannt. Dabei wurden jeweils die vorstehend erwähnten Bildpunkte erkannt, wobei bei den Panzern 7, 8 und 10 auch noch zusätzliche Bildpunkte als zusätzliche Information erkannt wurden, die eine genauere Positions- und Drehlagenbestimmung ermöglichten.

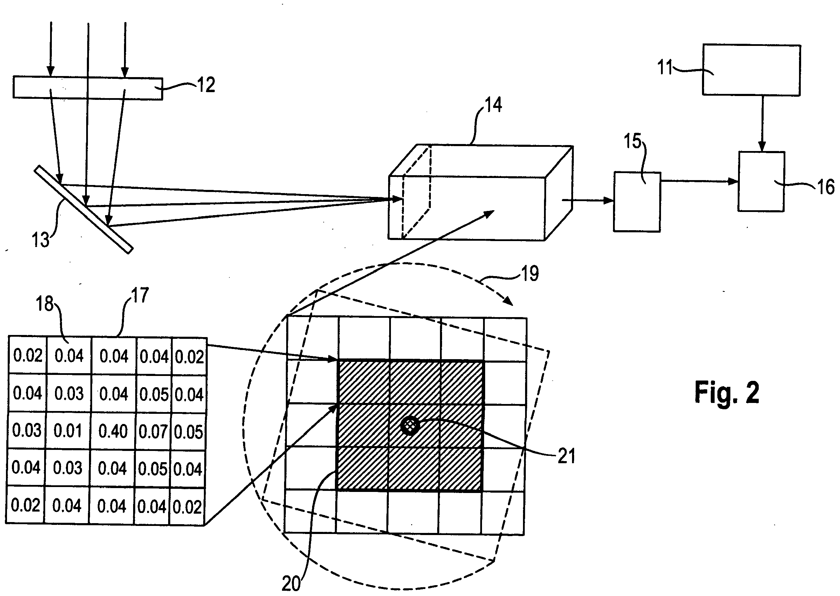

Die nachfolgende Darstellung dient in Verbindung mit Fig. 2 der Zeichnung der weiteren Erläuterung des erfindungsgemäßen Verfahrens.

Von allen Zielobjekten, die gesucht werden sollen, werden in einer Zielbildreferenzdatenbank 11 Abbildungen der charakteristischen Details angelegt und mit den nötigen Lagedaten auf dem Zielobjekt und in dem Detailreferenzbild abgespeichert. Dazu werden Daten abgespeichert, wo das Ziel aufgetreten ist. Sind keine direkten Bilder des Zieles verfügbar, so können diese mit ausreichender Information über das Zielobjekt per Computergraphiksystem erzeugt werden.

Über eine Teleskopoptik 12 und einen Scanspiegel 13 werden von einer NIR Kamera 14 mit Farbfilterrad aufgenommene Bildpunkte erfasst und von einem Bildaufbereitungsrechner 15 mit Koeffizientenfilter für die zu erfassenden Elemente aufbereitet. Mittels einer schematisch dargestellten Einrichtung 16 wird die nach der Erfindung vorgesehene Multispektralbilderkennung durchgeführt. Die Pixelauflösung des Suchbildes muss so umgerechnet werden, dass ausreichend viele gut erkennbare charakteristische und möglichst unverwechselbare Details des Suchobjektes auf eine Bildfläche von jeweils 15 x 15 Pixel abgebildet werden können. Der Merkmalsvektor eines Details wird erfindungsgemäß aus den Kenndaten von kleinen Bildflächen mit jeweils fünf x fünf Pixeln Größe gebildet. Als Kenndaten dienen hierbei im einfachsten Fall die Mittelwerte der Farbkomponenten und der Gesamthelligkeit der 25 Pixel. Erfindungsgemäß mit besserer Erkennungsleistung werden die mit der Filtermatrix 17 gewichteten Mittelwerte der Gesamthelligkeit und die gewichteten Mittelwerte der normierten Helligkeiten der einzelnen Farbkomponenten der Bildflächen als Merkmalsvektor verwendet.

Die Koeffizienten 18 der Filtermatrix 17 sind so ausgewählt, dass eine differenzierende und glättende Wirkung eintritt. Dadurch erscheint das Bild kontrastreicher und schärfer in den Kanten. Die Koeffizienten 18 der Filtermatrix 17 der einzelnen fünf mal fünf Pixel Bildflächen sind dabei so gewählt, dass ihr Merkmalsvektor (also ihre gewichteten Mittelwerte) rotationsinvariant ist, also in jeder Drehlage gleich ist.

Das ergibt den Rechenvorteil, dass der Merkmalsvektor der einzelnen Bildpixel mit Mittelung und Filterung nur einmal vorab gerechnet werden muss. Daraus können durch einfache Koordinatentransformation der Bildpunkte die 12 für die Tests verwendeten Merkmalsvektoren der 12 Drehlagen der Testumgebung berechnet werden. Die Testumgebung 20 weist bei der in Fig. 2 dargestellten Ausführungsform neun Elemente auf und besitzt ein Mittelpixel 21. Für die Berechnung eines größeren Details mit 15 Pixeln Durchmesser wird diese aus neun der fünf mal fünf Pixel Flächen zusammengesetzt. Die Pixelflächen auf den Diagonalen werden in einer Quadratanordnung, angeordnet, die für die Tests in die 12 Drehlagen transformiert werden muss.

Das Gesamtdetail wird damit erfindungsgemäß aus einer speziellen Anordnung von 8 jeweils um ein Mittelelement mit Mittelpixel 21 angeordneten fünf mal fünf Pixelelementen gebildet (im Rahmen der Pixelauflösung). Für die Berechnung des Merkmalsvektors des Gesamtdetails werden für jede zu testende Drehlage des Zieles die Mittelpunkte der fünf mal fünf Pixelelemente in die gesuchte Drehlage transformiert. Dann wird für jeden Mittelpunkt der gewichtete Mittelpunktwert für alle Farben und die Helligkeit aus der Gesamtbilddatenbank abgelesen und zu dem Merkmalsvektor des Gesamtdetails in der getesteten Drehlage zusammengefasst. Versuche haben ergeben, dass 12 getestete Drehlagen ausreichen für eine Mustererkennung mit voller Leistung.

Für die Charakterisierung eines Zieles, das sich vor einer Umgebung befindet, deren Muster dem Ziel sehr ähnlich ist, also z.B. einem fleckengetarnten Fahrzeug vor einem Vegetationshintergrund, werden nun jeweils mindestens zwei Testumgebungen ausgesucht, die möglichst mit dem Hintergrund unverwechselbare Details darstellen und Bilder in der höchst möglichen Auflösung verwendet, bei der die Fleckenmuster voll aufgelöst werden. Bei dieser Art von Bildern werden bereits mit den Mittelwerten für die Merkmalsvektoren gute Ergebnisse erzielt.

Bei der Suche nach sehr komplexen Gegenständen, die sich gut vom Hintergrund abheben, kann die Suche dadurch stark beschleunigt werden, dass die Suche in einem mit einer stark vergröberten Auflösung von z.B. sechs Meter bei einem 150 Meter Objekt dargestellten Suchbild gestartet wird, die so gewählt ist, dass das gesuchte Objekt gerade in einer 25 mal 25 Pixel Testumgebung erfasst wird. Die Größe der Testumgebung muss somit an jedes Ziel speziell angepasst werden um einen möglichst effektiven Suchvorgang zu erreichen. Ausserdem müssen in diesem Fall immer Mittelwerte und Standardabweichung für die Bildung der Merkmalsvektoren herangezogen werden um die Trennschärfe zu optimieren.

Sobald ein Suchobjekt erkannt wird, wird ein zweiter Satz von Testumgebungen bei höherer Auflösung von z.B. einem Meter Auflösung, der z.B. ein Schiff in z.B. sechs aneinanderliegenden Testumgebungen erfasst, gegen die Referenzdatenbasis getestet und die Erkennung des Objektes verfeinert. Auch hier werden Mittelwerte und Standardabweichung verwendet.

Wenn damit noch keine genaue Zuordnung des gefundenen Objektes zu der Referendatenbasis möglich ist, werden aus der Referenzdatenbasis z.B. Einzelobjekte an Deck eines Schiffsobjektes mit der vollen Auflösung der Kamera von z.B. 0.2 Meter herangezogen, um damit eine genauere Klärung der Identität des betrachteten Schifsobjektes mit Bezug zur Referenzdatenbasis herbeizuführen. Für die Suche nach Details reichen die Mittelwerte für die Bildung der Merkmalsvektoren.

Weiterhin können Objekte, z.B. Waffen, die an Deck eines normalerweise als legal bekannten Schiffes entdeckt werden, Hinweise geben, dass hier ein Verbrechen vorliegt. Für die genaue Erkennung von Waffen und ähnlichen gefährlichen Gegenständen können mit der Kamera Bilder mit sehr hoher Auflösung von 2,5 cm gemacht werden und mit Referenzaufnahmen verglichen werden. Aufnahmen dieser Art können als Beweismittel vor Gericht verwendet werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: erster Panzer
- 2: erster Bildpunkt des ersten Panzers
- 3: zweiter Bildpunkt des ersten Panzers
- 4: zweiter Panzer
- 5: erster Bildpunkt des zweiten Panzers
- 6: zweiter Bildpunkt des dritten Panzers
- 7: dritter Panzer
- 8: vierter Panzer
- 9: fünfter Panzer
- 10: sechster Panzer
- 11: Referenzzielbilddatenbank
- 12: Teleskopoptik
- 13: Scanspiegel
- 14: NIR-Kamera mit Farbfilterrad
- 15: Bildaufbereitungsrechner
- 16: Einrichtung
- 17: Koeffizientenmatrix
- 18: Koeffizient, Wichtungsfaktor eines Pixels
- 19: Drehlage
- 20: Testumgebung
- 21: Mittelpixel der Testumgebung

## Patentansprüche

1. Verfahren zur Erkennung des Vorhandenseins eines vorgegebenen Musters in einem Bilddatensatz, welcher mittels einer Vorrichtung zur Erfassung von wenigstens zwei elektromagnetischen Frequenzspektren erfasst wird, wobei der Bilddatensatz eine Vielzahl von Bildpunktdaten aufweist, **gekennzeichnet durch** die folgenden Schritte:
- Bilden jeweils eines Datenvektors für jeden Bildpunkt des Bilddatensatzes, wobei die Komponenten des Datenvektors charakteristische Koeffizientenwerte aus den Bildpunktdaten des jeweiligen Bildpunktes und den Bildpunktdaten der Bildpunkte in einer ersten Testumgebung des Bildpunkts sind, wobei die erste Testumgebung aus fünf mal fünf Bildpunkten um den jeweiligen Bildpunkt aufgebaut ist, wobei eine lineare Filterung mit einem zweidimensionalen digitalen Filter auf die Bildpunktdaten angewendet wird, welche eine Differentiation, eine Kantenerkennung und Glättung umfasst, wobei wenigstens einer der charakteristischen Koeffizientenwerte gefilterte und gewichtete Farbkomponenten oder Helligkeitswerte der Bildpunkte in der ersten Testumgebung repräsentiert;
- entsprechendes Bilden von Referenzdatenvektoren mit charakteristischen Referenzkoeffizientenwerten für wenigstens zwe ausgewählte Musterbildpunkte aus Musterbildmaterial des vorgegebenen Musters, welches einem vorgegebenem Objekt entspricht, das mit der Vorrichtung aufgezeichnet wurde;
- Bilden einer erweiterten Testumgebung mit 25 mal 25 Bildpunkten um jeden Bildpunkt des Bilddatensatzes, welche aus in sich rotationsinvarianten Elementen mit fünf mal fünf Bildpunkten gebildet wird;
- Transformieren der erweiterten Testumgebung in 12 unterschiedliche Drehlagen durch Koordinatendrehung;
- Bilden wenigstens eines ersten Differenzwerts für die transformierten erweiterten Testumgebungen der Bildpunkte aus einer Differenz zwischen dem Datenvektor des jeweiligen Bildpunkts und dem ersten Referenzdatenvektor;
- Bilden wenigstens eines zweiten Differenzwerts für wenigstens einen Bildpunkt aus einer Differenz zwischen dem Datenvektor dieses Bildpunkts und dem zweiten Referenzdatenvektor;
- Ermitteln, ob wenigstens eine aus dem ersten und dem zweiten Differenzwert gebildete Summe der Beträge von zwei Differenzwerten als Musterkorrelationsgröße einen vorgegebenen Schwellenwert unterschreitet und ob diese ein lokales Minimum bildet; und
- Erkennung des Vorhandenseins des vorgegebenen Musters, wenn der vorgegebene Schwellenwert unterschritten wurde und ein lokales Minimum vorliegt.

2. Verfahren nach Anspruch 1,
**dadurch gekennzeichnet,**
**dass** wenigstens ein charakteristischer Koeffizientenwert eines Datenvektors als eine Standardabweichung zwischen Bildpunktdaten ermittelt wird, die für innerhalb der ersten Testumgebung liegende Bildpunkte erfasst wurden, oder als eine Standardabweichung zwischen den Luminanzen der Bildpunkte der ersten Testumgebung ermittelt wird.

3. Verfahren nach Anspruch 1 oder 2,
**dadurch gekennzeichnet,**
**dass** wenigstens ein charakteristischer Koeffizientenwert eines Datenvektors als Mittelwert von Bildpunktdaten der Bildpunkte einer zweiten Testumgebung oder als Mittelwert der Luminanzen der Bildpunkte der zweiten Testumgebung ermittelt wird.

4. Verfahren nach einem der vorstehenden Ansprüche,
**dadurch gekennzeichnet,**
**dass** wenigstens ein charakteristischer Koeffizientenwert eines Datenvektors als eine Differenz zwischen dem Mittelwert der Bildpunktdaten oder Luminanzen der ersten Testumgebung und dem Mittelwert der Bildpunktdaten oder Luminanzen der zweiten Testumgebung ermittelt wird.

5. Verfahren nach einem der vorstehenden Ansprüche,
**dadurch gekennzeichnet,**
**dass** die Referenzdatenvektoren aus Musterbildpunktdaten einer Referenztestumgebung gebildet werden, für die Bildpunkte des ausgewählten Bereichs oder der Vorauswahl in Abhängigkeit der Differenzen zwischen erfassten Bildpunktdaten und den Musterbildpunktdaten aus der Referenztestumgebung ein Histogramm erstellt wird, und in Abhängigkeit einer Auswertung des Histogramms eine Auswahl an Bildpunkten gebildet wird.

6. Verfahren nach einem der vorstehenden Ansprüche,
**dadurch gekennzeichnet,**
**dass** ein Datenvektor in Abhängigkeit der Bildpunktdaten von Bildpunkten einer Testumgebung, die den Bildpunkt weitgehend quadratisch umgibt, ermittelt wird.

7. Verfahren nach einem der vorstehenden Ansprüche,
**dadurch gekennzeichnet,**
**dass** ein Hintergrundreferenzbild erfasst wird, und die Datenvektoren in Abhängigkeit der Bildpunktdaten des Hintergrundreferenzbildes aufbereitet werden.

8. Verfahren nach einem der vorstehenden Ansprüche,
**dadurch gekennzeichnet,**
**dass** zur Normalisierung eines Helligkeitswerts und/oder eines Farbkontrastwerts eine affine Transformation auf erfasste Bildpunktdaten angewendet wird.

9. Verfahren nach einem der vorstehenden Ansprüche,
**dadurch gekennzeichnet,**
**dass** zur Spreizung wenigstens eines Frequenzbereichs der Bilddaten oder zur Stauchung wenigstens eines Frequenzbereichs eine affine Transformation auf erfasste Bildpunktdaten angewendet wird.

## Claims

1. Method for detecting the presence of a predetermined pattern in an image data record, which is captured by means of an apparatus for capturing at least two electromagnetic frequency spectra, wherein the image data record has a multiplicity of pixel data,
**characterized by** the following steps:
- forming respectively one data vector for each pixel of the image data record, wherein the components of the data vector are characteristic coefficients from the pixel data of the respective pixel and the pixel data of the pixels in a first test environment of the pixel, wherein the first test environment is constructed from five by five pixels about the respective pixel, wherein a linear filter is applied to the pixel data with a two-dimensional digital filter, said filter comprising a differentiation, an edge detection and smoothing, wherein at least one or the characteristic coefficients represents filtered and weighted colour components of brightness values of the pixels in the first test environment;
- correspondingly forming reference data vectors with characteristic reference coefficients for at least two selected pattern pixels of pattern image material of the predetermined pattern, which corresponds to a predetermined object that was recorded by means of the apparatus;
- forming an extended test environment with 25 by 25 pixels about each pixel of the image data record, which is formed from intrinsically rotationally invariant elements of five by five pixels;
- transforming the extended test environment into 12 different rotational positions by rotating coordinates;
- forming at least one first difference value for the transformed extended test environments of the pixels from the difference between the data vector of the respective pixel and the first reference data vector;
- forming at least one second difference value for at least one pixel from the difference between the data vector of this pixel and the second reference data vector;
- establishing whether at least one sum of the absolute values of two difference values as a pattern correlation variable, formed from the first and the second difference values, undershoots a predetermined threshold value and whether this forms a local minimum; and
- detecting the presence of the predetermined pattern if the predetermined threshold value was undershot and a local minimum is present.

2. Method according to Claim 1,
**characterized**
**in that** at least one characteristic coefficient of a data vector is established as a standard deviation between pixel data, which were captured for pixels lying within the first test environment, or as a standard deviation between the luminance values of the pixels of the first test environment.

3. Method according to Claim 1 or 2,
**characterized**
**in that** at least one characteristic coefficient of a data vector is established as a mean value of pixel data of the pixels of a second test environment or as a mean value of the luminance values of the pixels of the second test environment.

4. Method according to any one of the preceding claims,
**characterized**
**in that** at least one characteristic coefficient of a data vector is established as the difference between the mean value of the pixel data or luminance values of the first test environment and the mean value of the pixel data or luminance values of the second test environment.

5. Method according to any one of the preceding claims,
**characterized**
**in that** the reference data vectors are formed from pattern pixel data of a reference test environment, a histogram is created for the pixels of the selected region or the preselection, depending on the differences between the captured pixel data and the pattern pixel data from the reference test environment, and a selection of pixels is formed, depending on an evaluation of the histogram.

6. Method according to any one of the preceding claims,
**characterized**
**in that** a data vector is established depending on the pixel data of pixels of a test environment, which surrounds the pixel in a largely square manner.

7. Method according to any one of the preceding claims,
**characterized**
**in that** a background reference image is captured and the data vectors are processed depending on the pixel data of the background reference image.

8. Method according to any one of the preceding claims,
**characterized**
**in that** an affine transformation is applied to captured pixel data for the purposes of normalizing a brightness value and/or a colour contrast value.

9. Method according to any one of the preceding claims,
**characterized**
**in that** an affine transformation is applied to captured pixel data for the purposes of spreading at least one frequency range of the image data or for the purposes of compressing at least one frequency range.

## Revendications

1. Procédé de reconnaissance de la présence d'un modèle prédéfini dans un jeu de données d'image, lequel est acquis au moyen d'un arrangement servant à l'acquisition d'au moins deux spectres de fréquences électromagnétiques, le jeu de données d'image possédant une pluralité de données de pixel,
**caractérisé par** les étapes suivantes :
- formation respectivement d'un vecteur de données pour chaque pixel du jeu de données d'image, les composantes du vecteur de données étant des valeurs de coefficient caractéristiques issues des données de pixel du pixel respectif et des données de pixel des pixels dans un premier environnement de test du pixel, le premier environnement de test étant constitué de cinq fois cinq pixels autour du pixel respectif, un filtrage linéaire avec un filtre numérique bidimensionnel étant appliqué sur les données de pixel, lequel comprend une différenciation, une reconnaissance d'arête et un lissage, au moins l'une des valeurs de coefficient caractéristiques représentant des composantes de couleur filtrées et pondérées ou des valeurs de luminosité des pixels dans le premier environnement de test ;
- formation en conséquence de vecteurs de données de référence avec des valeurs de coefficient de référence caractéristiques pour au moins deux pixels de modèle choisis à partir du matériel d'image de modèle du modèle prédéfini, lequel correspond à un objet prédéfini qui a été enregistré avec l'arrangement ;
- formation d'un environnement de test étendu avec 25 fois 25 pixels autour de chaque pixel du jeu de données d'image, lequel est formé à partir d'éléments invariants en rotation de cinq fois cinq pixels ;
- transformation de l'environnement de test étendu en 12 positions de rotation différentes par rotation des coordonnées ;
- formation d'au moins une première valeur de différence pour les environnements de test étendus transformés des pixels à partir d'une différence entre le vecteur de données du pixel respectif et le premier vecteur de données de référence ;
- formation d'au moins une deuxième valeur de différence pour au moins un pixel à partir d'une différence entre le vecteur de données de ce pixel et le deuxième vecteur de données de référence ;
- détermination du fait de savoir si au moins une somme des valeurs de deux valeurs de différence, formée à partir de la première et de la deuxième valeur de différence en tant que grandeur de corrélation de modèle est inférieure à une valeur de seuil prédéfinie et si celle-ci forme un minimum local ; et
- reconnaissance de la présence du modèle prédéfini lorsque la valeur de seuil prédéfinie a été franchie vers le bas et qu'il existe un minimum local.

2. Procédé selon la revendication 1, **caractérisé en ce qu'**au moins une valeur de coefficient caractéristique d'un vecteur de données est déterminée en tant qu'écart-type entre des données de pixel, qui ont été acquises pour les pixels se trouvant à l'intérieur du premier environnement de test, ou est déterminée en tant qu'écart-type entre les luminances des pixels du premier environnement de test.

3. Procédé selon la revendication 1 ou 2, **caractérisé en ce qu'**au moins une valeur de coefficient caractéristique d'un vecteur de données est déterminée en tant que valeur moyenne des données de pixel des pixels d'un deuxième environnement de test ou en tant que valeur moyenne des luminances des pixels du deuxième environnement de test.

4. Procédé selon l'une des revendications précédentes, **caractérisé en ce qu'**au moins une valeur de coefficient caractéristique d'un vecteur de données est déterminée en tant qu'une différence entre la valeur moyenne des données de pixel ou des luminances du premier environnement de test et la valeur moyenne des données de pixel ou des luminances du deuxième environnement de test.

5. Procédé selon l'une des revendications précédentes, **caractérisé en ce que** les vecteurs de données de référence sont formés à partir de données de pixel de modèle d'un environnement de test de référence, un histogramme est formé à partir de l'environnement de test de référence pour les pixels de la zone sélectionnée ou la présélection en fonction des différences entre les données de pixel acquises et les données de pixel de modèle, et une sélection de pixels est formée en fonction d'une interprétation de l'histogramme.

6. Procédé selon l'une des revendications précédentes, **caractérisé en ce qu'**un vecteur de données est déterminé en fonction des données de pixel de pixels d'un environnement de test qui entoure le pixel en grande partie de manière quadratique.

7. Procédé selon l'une des revendications précédentes, **caractérisé en ce qu'**une image de référence d'arrière-plan est capturée, et les vecteurs de données sont préparés en fonction des données de pixel de l'image de référence d'arrière-plan.

8. Procédé selon l'une des revendications précédentes, **caractérisé en ce qu'**une transformation affine est appliquée sur des données de pixel acquises en vue de la normalisation d'une valeur de luminosité et/ou d'une valeur de contraste de couleur.

9. Procédé selon l'une des revendications précédentes, **caractérisé en ce qu'**une transformation affine est appliquée sur des données de pixel acquises en vue d'une dispersion d'au moins une plage de fréquences des données d'image ou en vue d'une compression d'au moins une plage de fréquences.
